# EUROPÄISCHE PATENTSCHRIFT

(11) **EP 0 802 756 B1**
(45) Veröffentlichungstag und Bekanntmachung des Hinweises auf die Patenterteilung: **10.11.1999**
(21) Anmeldenummer: 96900076.9
(22) Anmeldetag: 09.01.1996
(51) Int. Cl.: A47J 36/04, A47J 27/022

(54) **KOCHGEFÄSS ZUR VERWENDUNG AUF EINER KOCHPLATTE**
COOKING VESSEL FOR USE ON A COOKER RING
RECIPIENT DE CUISSON S'UTILISANT SUR UNE PLAQUE DE CUISSON

(30) Priorität: 13.01.1995 CH 10595
(43) Veröffentlichungstag der Anmeldung: 29.10.1997
(73) Patentinhaber: Ecowatt Produktions AG, 4051 Basel (CH)
(72) Erfinder: MARAVIC, Dusko, CH-5415 Nussbaumen (CH)
(74) Vertreter: Braun, André
(86) Internationale Anmeldenummer: CH9600009
(87) Internationale Veröffentlichungsnummer: WO9621384

(56) Entgegenhaltungen:
- DE-A- 3 204 214
- FR-A- 2 261 733
- FR-A- 2 436 596
- FR-A- 2 499 966
- PATENT ABSTRACTS OF JAPAN vol. 016, no. 581 (C-1012), 21.Dezember 1992 & JP,A,04 231384 (KAWASAKI REFRACT CO LTD), 20.August 1992,
- PATENT ABSTRACTS OF JAPAN vol. 016, no. 022 (E-1156), 20.Januar 1992 & JP,A,03 238788 (NISHIMURA TOGYO KK), 24.Oktober 1991,
- PATENT ABSTRACTS OF JAPAN vol. 014, no. 562 (C-0788), 13.Dezember 1990 & JP,A,02 243570 (FUJITSU LTD), 27.September 1990,

## Beschreibung

Die vorliegende Erfindung betrifft ein Kochgefäss zur Verwendung auf einer Kochplatte gemäss Oberbegriff des Patentanspruches 1.

Seit einigen Jahren werden grosse Anstrengungen unternommen, den gesamten Energieverbrauch zu reduzieren. Diese Energiesparmassnahmen betreffen die Nahrungsmittelzubereitung. In diesem Bereich wurde jedoch vorallem versucht, den Verbraucher zu sensibilisieren, so dass dieser beim Kochen die Kochplatten energiebewusster verwendet. Das heisst, dass er beispielsweise nicht eine unnötig grosse Wassermenge erhitzt oder dass er eine bereits heisse Kochplatte für die Zubereitung eines weiteren Gerichtes verwendet und nicht eine zweite Kochplatte einschaltet.
Bei der Entwicklung von Kochgefässen oder von Kochplatten wurden bis jetzt jedoch kaum energetische Aspekte mitberücksichtigt. So sind Glaskeramikkochplatten weit verbreitet, obwohl ihre Wärmeübertragung von der Heizquelle zur Glaskeramikoberfläche mittels Wärmestrahlung erfolgt und so durch die entstehenden Verluste einen hohen Energieverbrauch aufweist. Ebenso sind die Kochgefässe, vorallem ihre Böden, so gestaltet, dass sie möglichst dauerhaft sind, dass also ihre Form durch die Wärmebelastung und die Temperaturschocks, denen sie ausgesetzt sind, nicht beeinträchtigt wird. Diese formbeständigen Kochgefässe leisten zwar einen gewissen Beitrag zum Energiesparen, da sie einen guten Kontakt mit der wärmeübertragenden Kochplatte gewährleisten sollten. Die Lösung, die jedoch für die Erlangung der Formbeständigkeit gefunden wurde, verhindert gerade eine Optimierung des Energieverbrauches. So sind im wesentlichen zwei Hauptgruppen von Kochgefässen aus Metall bekannt:

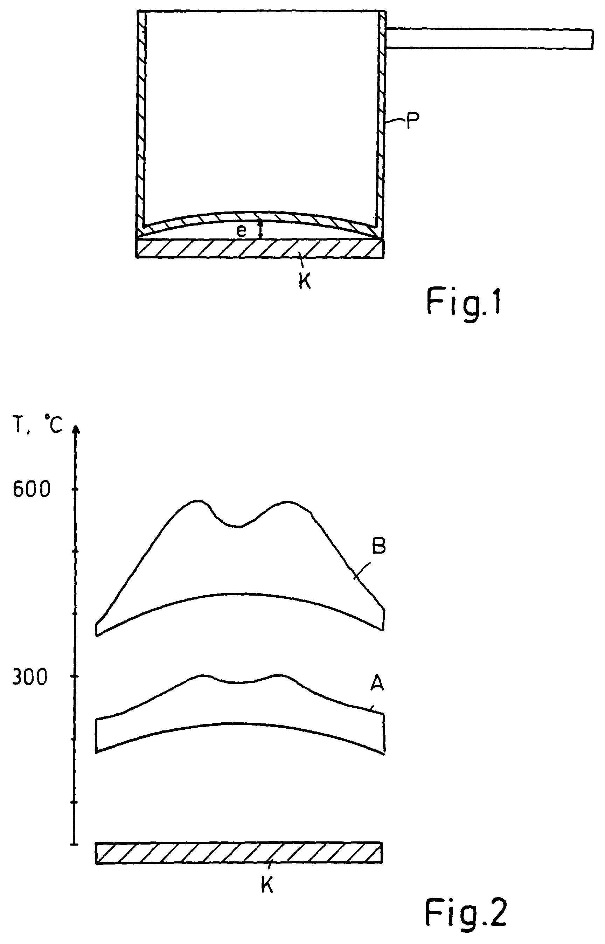

Die erste Gruppe umfasst Kochgefässe, die eine relativ kleine Masse und einen dünnen, einfachen Boden besitzen. Der Boden weist einen konkaven Einzug e gemäss der Figur 1 auf, so dass ein Abstand zwischen der Bodenmitte und der Oberfläche der Kochplatte vorhanden ist. Dieser Abstand sollte 6 ‰ des Gefässdurchmessers betragen. Bei der Erwärmung des Gefässes dehnt sich der Boden in Richtung Wärmequelle aus, so dass sich der Abstand verkleinert.

Dieses Kochgefäss würde sich wegen der geringen Masse mit relativ kleinem Energieaufwand erhitzen lassen. Der dünne Boden ist jedoch anfällig gegen mechanische Belastung. Zudem unterliegt er bei ungleichmässiger Beheizung einem Verzug und verliert somit nach kurzem Gebrauch seine optimale Form. Eine derartige ungleichmässige Beheizung liegt vor, wenn Kochplatte und Kochgefäss nicht denselben Durchmesser aufweisen oder wenn das Kochgefäss nicht genau auf der Kochplatte abgestellt wird. Die Hauptursache der ungleichmässigen Beheizung liegt jedoch in der konkaven Form des Bodens selber. Da bei der Erwärmung des Bodens eine Ausdehnung erfolgt, bewegt er sich in Richtung zur Wärmequelle hin. Mit zunehmender Temperatur des Bodens erhöht sich somit die Kontaktfläche zwischem dem Kochgefäss und der Kochplatte, wodurch der Wärmeübergang wesentlich verbessert wird. Eine vollständige Berührung der ganzen Bodenoberfläche kommt jedoch kaum vor, so dass auf der Kochplattenoberfläche eine uneinheitliche Temperaturverteilung vorhanden ist. Zur Veranschaulichung ist in Figur 2 eine schematische graphische Darstellung der Temperaturverteilung auf einer Kochplattenoberfläche K für verschiedene Kochgefässe dargestellt, wobei bei den Messungen die Temperaturbegrenzung der Kochplatte ausgeschaltet worden ist. Der Kurvenbereich A zeigt die Temperaturverteilung über der Hochplatte während der Erwärmung von Kochgefässen, die gemäss dem heutigen Stand als "gut" eingestuft werden. Der Kurvenbereich B hingegen zeigt das Temperaturverhalten derselben Hochplatte bei Verwendung von "schlechten" Kochgefässen. Es ist ersichtlich, dass auch bei den "guten" Kochgefässen, bedingt durch ihren Bodeneinzug, keine gleichmässige Temperaturverteilung vorhanden ist. In der Regel ist somit der Wärmeübergang zum Kochgefäss, bedingt durch Strahlungsverluste, sehr schlecht, wodurch die Kochzeit verlängert und der Energieverbrauch erhöht wird. Zudem muss die Temperatur der Kochplatte sehr hoch gehalten werden. Zum Beispiel beträgt sie für Glaskeramikplatten ca. 550°C.

Die zweite Gruppe der bekannten Kochgefässe weist einen sogenannten Sandwichboden auf, der meist aus verschiedenen Metallen besteht. Diese Böden sind robuster, weisen einen kleineren Einzug auf und behalten ihre Form wesentlich länger. Sie besitzen jedoch eine grosse Masse, oft beträgt diese mehr als die Hälfte des Eigengewichtes des Kochgefässes. Durch diese Erhöhung der Masse verlängert sich auch die Zeit, die es braucht, um dieses Kochgefäss zu erwärmen. Zudem hat auch ihr Bodeneinzug eine ungleichmässige Temperaturverteilung auf der Kochplattenoberfläche zur Folgen. Die Hochzeit wird verlängert und der Energieverbrauch erhöht. Des weiteren sind diese Kochgefässe mit Sandwichböden wegen der aufwendigen Herstellung relativ teuer.

Ferner ist aus FR-A-2'436'596 ein Kochgefäss bekannt, welches aus Glaskeramik hergestellt ist. Zur Verbesserung der Wärmeleitfähigkeit und der Thermoschockresistenz ist mindestens ein Teil der Aussenseite mit einer Aluminiumschicht überzogen.

DE-A-3'204'214 (cf. Oberbegriff des Anspruchs 1) beschreibt eine Kombination eines Warmhaltegefässes mit einem Kochgefäss. Die Gefässwandung ist aus Kunststoff gefertigt, der Boden besteht aus Metall. Die Gefässwandung ist gegenüber dem Boden wärmeisoliert, damit der Kunststoff nicht schmilzt.

JP 900409407 offenbart zudem die Verwendung von Aluminiumnitrid als Wärmeübertragungskörper für Kochgeräte.

Es ist deshalb Aufgabe der Erfindung, ein Kochgefäss zu schaffen, das den Energieverbrauch beim Kochen minimiert und trotzdem eine grosse Lebensdauer aufweist.

Diese Aufgabe löst ein Kochgefäss zur Verwendung auf einer Kochplatte mit einem Boden und einer Gefässwandung, wobei das Kochgefäss zweistückig ausgebildet ist, wobei der Boden und die Gefässwandung je ein Stück bilden und wobei sie miteinander verbunden sind, und wobei der Boden mindestens auf seiner Aussenseite eine plane Fläche bildet dadurch gekennzeichnet, dass mindestens der Boden aus einer gut wärmeleitenden, thermoschockresistenten und annähernd wärmeausdehnungsfreien Ingenieurkeramik besteht.

Es sind zwar im Haushaltungsbereich Gefässe bekannt, die ebenfalls einen annähernd planen Boden aufweisen und aus Keramik gefertigt sind. Diese Gefässe sind jedoch keine Kochgefässe zur Verwendung auf Kochplatten, sondern werden vorallem zum Backen verwendet. Beispiele sind Tontöpfe für Backöfen oder auch Fondue-Pfannen. Diese Gefässe bestehen aus sogenannten Bau- oder Haushaltkeramiken, wie Ton, die eine schlechte Wärmeleitfähigkeit und eine geringe Thermoschockresistenz aufweisen und somit als Kochgefässe ungeeignet sind. Bei Ingenieurkeramiken hingegen werden die Zutaten gezielt ausgewählt, so dass sie die für eine spezielle Anwendung gewünschten Eigenschaften aufweisen. Die Tatsache, dass die Tongefässe einen annähernd planen Boden aufweisen, ist herstellungsbedingt und dient nicht zur Energieoptimierung.

Das erfindungsgemässe Kochgefäss hingegen liegt dank seinem planen Boden vollständig auf der Kochplatte auf, so dass die Wärmeübertragung mittels Wärmeleitung erfolgt. Dieser Kontakt bleibt während der gesamten Kochdauer vollständig bestehen, da der Boden materialbedingt annähernd keiner Flächenausdehnung und Verformung unterworfen ist. Zudem ist das Material des Bodens so gewählt, dass es eine gute Wärmeleitung gewährleistet und zudem möglichst thermoschockresistent ist. Die zweite Eigenschaft ermöglicht erst die uneingeschränkte Verwendung als Kochgefäss.

Die so erzielte bessere Wärmeübertragung vermindert den Energiebedarf, da kaum Strahlungsverluste auftreten und die Kochplatte nicht auf eine hohe Temperatur erhitzt werden muss. Zudem kann die Masse des Bodens relativ klein gehalten werden, so dass das Kochgefäss wesentlich schneller erhitzt wird und der effektive Wärmefluss in die Kochspeise früher einsetzt als bei den bekannten, oben beschriebenen Kochgefässen. Der Energiebedarf liegt im allgemeinen 15-25% tiefer als bei Kochgefässen mit Sandwich-Böden.

Eine falsche Verwendung des erfindungsgemässen Kochgefässes ist ebenfalls ohne nachhaltige Wirkung. Die bekannten Kochgefässe sind aus den bereits oben erläuterten Gründen einem Verzug unterworfen, wenn sie sich nicht zentrisch auf der Kochplatte befinden oder wenn die Kochplatte zu klein ist. Der Boden des erfindungsgemässen Kochgefässes unterliegt keinen hohen thermospannungsindizierten Kräften, so dass auch die Wärmeleitung kaum durch azentrische Plazierung verzögert wird.

In den beiliegenden Zeichnungen sind Ausführungsbeispiele des Erfindungsgegenstandes dargestellt, die in der nachfolgenden Beschreibung erläutert sind. Es zeigen
- Figur 1: eine schematische Darstellung eines Kochgefässes gemäss dem Stand der Technik im Querschnitt;
- Figur 2: eine graphische Darstellung der Temperaturverteilung auf der Oberfläche einer Kochplatte K für verschiedene Kochgefässe;
- Figur 3: eine schematische Darstellung eines Kochgefässes gemäss der Erfindung im Querschnitt;
- Figur 4: einen Auschnitt einer weiteren Ausführungsform des erfindungsgemässen Kochgefässes im Querschnitt und
- Figur 5: eine weitere Ausführungsform des erfindungsgemässen Kochgefässes im Querschnitt.

In Figur 1 ist ein bekanntes, bereits oben beschriebenes Kochgefäss mit einem Einzug e dargestellt, das sich auf einer Kochplatte K befindet, wobei auf der Kochplattenoberfläche eine Temperaturverteilung gemäss Figur 2 vorhanden ist.

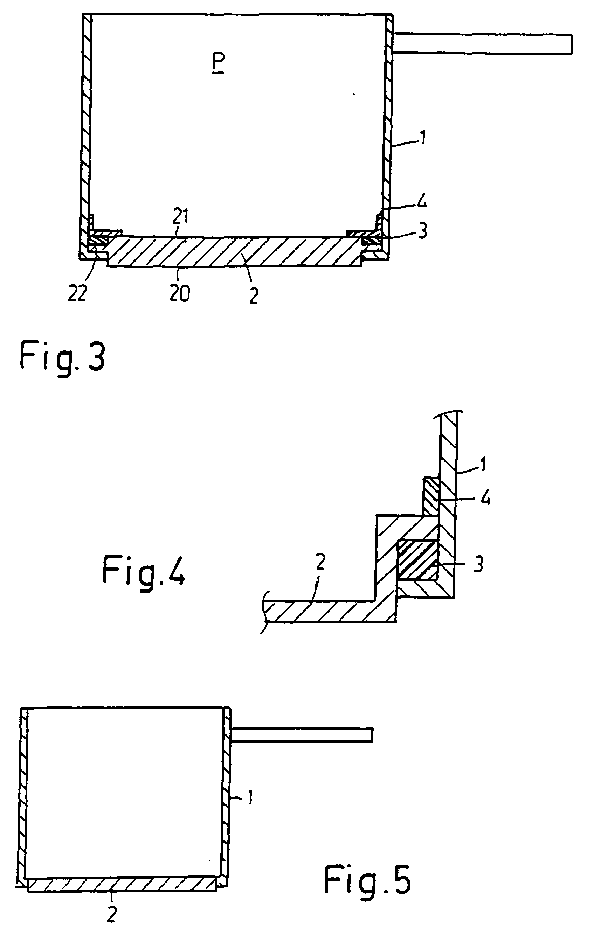

In Figur 3 ist eine Ausführungsform eines Kochgefässes P gemäss der Erfindung dargestellt. Es weist eine Gefässwandung 1 und einen damit verbundenen Boden 2 auf. Die Gefässwandung 1 ist bevorzugterweise aus Metall oder Legierungen hergestellt, wobei dieselben Materialien verwendet werden wie bei den bekannten Kochgefässen. Der Boden 2 des Kochgefässes P bildet mindestens auf seiner Aussenseite 20 eine plane Fläche. In diesem Beispiel ist der Boden 2 aus einer planparallelen Platte gefertigt, so dass auch die Innenseite 21 eine plane Fläche bildet.

Der Boden 2 kann auf verschiedenste Weise mit der Gefässwandung verbunden sein, wobei im allgemeinen eine Kombination von Form- und Kraftschluss verwendet wird. In Figur 3 weist die Gefässwandung 1 eine in das Gefässinnere geneigte Umrandung 10 auf, auf der eine umlaufende Nase 22 des Bodens 2 aufliegt. Dabei ist die Dicke des Bodens 2 so gross, dass er auf der Unterseite des Gefässes leicht über die Gefässwandung vorsteht, so dass die Grösse der zu beheizenden Fläche für den Benützer klar erkennbar ist. Der Boden 2 ist mittels einem Haltering 4, der im Gefässinnern gefedert an die Gefässwand 1 angepresst wird, in seiner Position gehalten. Auf der Nase 22, unterhalb des Halteringes 4, ist eine Dichtmasse 3 eingelagert, so dass die Dichtheit der Verbindung gewährleistet ist. Als Abdichtung wird bevorzugterweise eine Dichtmasse auf Silikonbasis verwendet.

Eine andere Verbindung zwischen Boden 2 und Gefässwandung 1 ist in Figur 4 dargestellt. Der Rand des Bodens 2 ist geringfügig tiefgezogen, so dass er einen s-förmigen Querschnitt aufweist. Dieser Rand liegt wiederum auf einer nach innen geneigten Umrandung 20 der Gefässwandung 1 auf, wobei im Auflagebereich eine wie oben beschriebene Dichtungsmasse 3 aufliegt. Auch bei dieser Ausführungsform ist der Boden durch einen an die Gefässinnenwandung angepressten Haltering 4 in seiner Position fixiert.

In Figur 5 ist eine weitere Verbindungsart dargestellt. Diese Verbindungsart wird bevorzugterweise bei Gefässwandungen aus Glas oder anderen Materialien mit kleinen Längenausdehnungskoeffizienten verwendet. Der Boden 2 ist in der Gefässwandung 1 eingeschmolzen. Dies ist beispielsweise mit Borosilikatglas möglich. Der Boden kann in diesem Fall auch mit Glaslot beziehungsweise anderen geeigneten Klebstoffen mit der Gefässwandung verbunden werden.

Der Boden 2 besteht aus einer Ingenieurkeramik, die gute wärmeleitende Eigenschaften aufweist, thermoschockresistent ist und einen so kleine Ausdehnungskoeffizienten besitzt, dass sie im verwendeten Temperaturbereich als annähernd wärmeausdehnungsfrei bezeichnet werden kann. Dadurch bleibt der Boden 2 bei jeder Temperatur eben und ermöglicht so einen optimalen Kontakt mit der Kochplatte, so dass keine Verluste durch Wärmestrahlung auftreten, sondern der Wärmetransport lediglich mittels Wärmeleitung erfolgt.
Bevorzugterweise ist der Boden 2 aus Siliziumnitrit (Si₃N₄), Siliziumkarbit (SiC), Aluminiumnitrit (AlN) oder anderen Materialien mit vergleichbaren Eigenschaften gefertigt. Diese Materialien zeichnen sich durch hohe Biegebruchfestigkeit, Bruchzähigkeit und Oxidationsbeständigkeit aus. In der Regel ist die Herstellung von Platten aus derartigen Materialien sehr aufwendig und entsprechend teuer. Es ist jedoch ein Verfahren bekannt, mittels dessen sich die erforderlichen Platten mittels Flachextrusion wesentlich preiswerter herstellen lassen, so dass derartige Kochgefässe zu einem tieferen Preis als diejenigen mit Sandwich-Böden produzierbar sind.

Die Dicke des Bodens 2 beträgt bevorzugterweise 1% seines Durchmessers, sie ist jedoch keinen strengen Vorschriften unterworfen.

Die aus den obengenannten Materialien hergestellten Böden 2 sind pflegeleicht und toxisch unbedenklich. Die Keramikoberfläche ist wegen ihrer Härte kaum beschädigbar. Zur optischen Verbesserung und damit eine geschlossene Fläche über dem Haltering und dem Boden angeordnet ist, kann die Innenseite des Gefässes oder zumindest der Boden beschichtet sein, wobei die Beschichtung bevorzugterweise eine bereits für bekannte Kochgefässe verwendete Zusammensetzung aufweist.

Das erfindungsgemässe Kochgefäss ist auf allen bekannten Kochplatten verwendbar, auf denen auch die konventionellen Kochgefässe eingesetzt werden. Um den Energieverbrauch möglichst klein zu halten, sollte jedoch des weiteren auch die Kochplatte selber energetisch optimiert sein.

## Patentansprüche

1. Kochgefäss zur Verwendung auf einer Kochplatte mit einem Boden (2) und einer Gefässwandung (1), wobei das Kochgefäss zweistückig ausgebildet ist, wobei der Boden (2) und die Gefässwandung (1) je ein Stück bilden und wobei sie miteinander verbunden sind, und wobei der Boden (2) mindestens auf seiner Aussenseite eine plane Fläche bildet dadurch gekennzeichnet, dass mindestens der Boden (2) aus einer gut wärmeleitenden, thermoschockresistenten und annähernd wärmeausdehnungsfreien Ingenieurkeramik besteht.

2. Kochgefäss nach Anspruch 1, dadurch gekennzeichnet, dass mindestens der Boden (2) aus Siliziumnitrit (Si₃N₄), Siliziumkarbit (SiC) oder Aluminiumnitrit (AlN) gefertigt ist.

3. Kochgefäss nach einem der Ansprüche 1 oder 2, dadurch gekennzeichnet, dass die Gefässwandung (1) aus Metall oder Glas gefertigt ist.

4. Kochgefäss nach einem der Ansprüche 1 bis 3, dadurch gekennzeichnet, dass der Boden (2) eine planparallele Platte ist.

5. Kochgefäss nach Anspruch 1, dadurch gekennzeichnet, dass der Boden (2) gegenüber der Gefässwandung (1) mittels einer Dichtmasse (3) auf Silikonbasis abgedichtet ist.

6. Kochgefäss nach Anspruch 1, dadurch gekennzeichnet, dass der Boden (2) mittels eines Halteringes (4) in der Gefässwandung (1) gehalten ist.

7. Kochgefäss nach einem der Ansprüche 1 bis 4, dadurch gekennzeichnet, dass der Boden (2) in der Gefässwandung (1) eingeschmolzen ist.

8. Kochgefäss nach Anspruch 1, dadurch gekennzeichnet, dass der Boden (2) auf der Innenseite des Kochgefässes beschichtet ist.

9. Kochgefäss nach Anspruch 1, dadurch gekennzeichnet, dass der Boden (2) eine Dicke von annähernd 1% seines Durchmessers aufweist.

10. Kochgefäss nach Anspruch 1, dadurch gekennzeichnet, dass die Gefässwandung (1) aus einer Ingenieurkeramik besteht.

## Claims

1. A cooking vessel for the use on a cooker ring, having a base (2) and a vessel wall (1), said cooking vessel being formed of two pieces, wherein the base (2) and the vessel wall (1) each form a single piece, and whereby said pieces being linked together and the base (2) at least on the outside has a plane surface, characterized in that at least the base (2) is made of a well heat-conductive, heat-shock-resistant engineering ceramic with virtually no expansion under heat.

2. A cooking vessel according to claim 1, characterized in that at least the base (2) is made of silicon nitride (Si₃N₄), silicon carbide (SiC) or aluminium nitride (AlN).

3. A cooking vessel according to any one of the claims 1 or 2, characterized in that the vessel wall (1) is made of metal or glass.

4. A cooking vessel according to any one of the claims 1 to 3, characterized in that the base (2) is a planar-parallel plate.

5. A cooking vessel according to claim 1, characterized in that the base (2) and the vessel wall (1) are sealed together by a sealing mass (3) which is made of a silicone base.

6. A cooking vessel according to claim 1, characterized in that the base (2) is held to the vessel wall (1) by a support ring (4).

7. A cooking vessel according to any one of the claims 1 to 4, characterized in that the base (2) is molted into the vessel wall (1).

8. A cooking vessel according to claim 1, characterized in that the base (2) is coated at the inside of the cooking vessel.

9. A cooking vessel according to claim 1, characterized in that the base (2) has the thickness of about 1% of its diameter.

10. A cooking vessel according to claim 1, characterized in that the vessel wall (1) is made of an engineering ceramic.

## Revendications

1. Un récipient de cuisson pour l'utilisation sur une plaque de cuisinière ayant une base (2) et une paroi (1), où ledit récipient de cuisson est formé de deux parties, où la base (2) et la paroi (1) forment chacune une partie et où lesdites parties sont liées ensemble et où la base (2) a au moins à l'extérieur une surface plate, caractérisé en ce qu'au moins la base (2) est fabriquée à partir d'une céramique d'ingénierie, bon conducteur thermique, résistante au choc thermique et pratiquement sans expansion thermique.

2. Un récipient de cuisson selon la revendication 1, caractérisé en ce qu'au moins la base (2) est fabriquée en nitrure de silicium (Si₃N₄), carbure de silicium (SiC) ou nitrure d'aluminium (AlN).

3. Un récipient de cuisson selon l'une quelconque des revendications 1 ou 2, caractérisé en ce que la paroi (1) est fabriquée en métal ou en verre.

4. Un récipient de cuisson selon l'une quelconque des revendications 1 à 3, caractérisé en ce que la base (2) est une plaque plan-parallèle.

5. Un récipient de cuisson selon la revendication 1, caractérisé en ce que la base (2) est scellée à la paroi (1) au moyen d'une masse scellante (3) à base de silicone.

6. Un récipient de cuisson selon la revendication 1, caractérisé en ce que la base (2) est tenue à la paroi (1) à l'aide d'une bague de maintien (4).

7. Un récipient de cuisson selon l'une quelconque des revendications 1 à 4, caractérisé en ce que la base (2) est fondue dans la paroi (1).

8. Un récipient de cuisson selon la revendication 1, caractérisé en ce que la base (2) est enduite à l'intérieur du récipient de cuisson.

9. Un récipient de cuisson selon la revendication 1, caractérisé en ce que la base (2) a une épaisseur d'environ 1% de son diamètre.

10. Un récipient de cuisson selon la revendication 1, caractérisé en ce que la paroi (1) est fabriquée à partir d'une céramique d'ingénierie.
